# EUROPEAN PATENT SPECIFICATION

(11) **EP 4 036 720 B1**
(45) Date of publication and mention of the grant of the patent: **04.10.2023**
(21) Application number: 21154191.7
(22) Date of filing: 29.01.2021
(51) Int. Cl.: G06F 9/455, G06F 9/445, G06F 12/0811, G06F 12/0842, G06Q 10/06

(54) **HASH OPTIMIZED COMPOSITION CACHE FOR ISOLATED EXECUTION ENVIRONMENTS**
HASH-OPTIMIERTER ZUSAMMENGESETZTER CACHE FÜR ISOLIERTE AUSFÜHRUNGSUMGEBUNGEN
CACHE DE COMPOSITION OPTIMISÉ PAR HACHAGE POUR LES ENVIRONNEMENTS D'EXÉCUTION ISOLÉS

(43) Date of publication of application: 03.08.2022
(73) Proprietor: Robocorp Technologies, Inc., San Francisco, CA 94111 (US)
(72) Inventor: Pohjalainen, Juha, San Francisco, CA 94111 (US); Harju, Kari, San Francisco, CA 94111 (US); Koskinen, Teppo, San Francisco, CA 94111 (US)
(74) Representative: Hernandez, Yorck

(56) References cited:
- US-A1- 2014 359 043
- US-A1- 2018 113 684

## Description

The present invention is directed towards the optimization of cache management and the provision of runtime environments for the execution of software components. Software components to be executed may have a very limited lifespan and consequently environments have to be created instantly, are operated for the required time and are discarded at potentially high frequency. The present invention addressed the problem that environments require large storage capacities, processing time and power and bandwidth in case the data is transmitted over a network. Together with the method a system arrangement for hash optimized composition of a global cache for isolated execution environments, a computer program product and a computer-readable medium having stored thereon the computer program is suggested.

US 2018/113684 A1, D1, describes disclose systems, methods and computer program products to perform an operation for sharing artifacts between instances of an application deployed in a cloud computing environment. The operation generally includes upon determining, during staging of the application, that a set of artifacts are not available for instances of the application to share in the cloud computing environment, generating the set of artifacts via a first application instance, storing the set of artifacts, and requesting a re-staging of the application. The operation also includes during the re-staging of the application, generating a file for deploying scaled instances of the application and packing the stored set of artifacts into the generated file via a second application instance. The operation further includes executing an instance scale out of the application with the generated file comprising the stored set of artifacts.

EP 3 138 057 A1 shows computer-implemented method to automate package deliveries, comprising receiving, by one or more computing devices, a request for a package delivery, the request comprising an identification of a package and an identification of a delivery location; associating, by the one or more computing devices, the package with a delivery device amongst others.

WO 2009/101212 refers to a method and system for incorporating service-oriented automation components of a manufacturing facility into a flexible IT enterprise architecture. In order to configure flexible production facilities in the form of an orchestration procedure and to specify elements, it is envisaged that the service-oriented automation components will be coupled via a higher-level orchestration middleware and that the services offered by the service-oriented automation components will be implemented using a vectorial function and one on orchestration of service-oriented automation component based layouts are integrated into the higher level.

Computer implemented agents is a growing research topic involving several fields such as software automation, artificial intelligence, underlying hardware infrastructures as well as parallelization of processing steps and their distribution over a heterogeneous computer network. Robotic process automation (RPA) is a form of process automation based on software robots. Software robots complete the technical processes in a way a person would, only faster and typically with fewer mistakes. This is a technical effect that allows more reliable results.

Some technical processes might require a person to complete several manual operations over a multitude of systems. Often these steps can be described and documented comprehensively in a list of actions to take to complete the process from the beginning to the end. Robotic process automation can be applied to automate those documented actions, for instance, in a way that they can be completed automatically by software robots. Robotic process automation (RPA) may use software robots (bots), also referred to as workers or agents, possibly along with artificial intelligence, for computer implemented process automation.

RPA started out as a business user-focused domain, but as applications of RPA become more high-impact and business-critical, we start to see more developer-oriented tools emerging. With these developer tools, RPA implementation is becoming more of a domain for software robot developers, not as much for casual business users. Software robot developers want to embrace all the best practices of developers, so sharing and reusing code becomes a normal way of working.

As open-source RPA tools mature, software robots become a commodity that every organization is eventually able to use. With this change, the role of the software robot developer will be in high demand, as RPA starts coming available for new kinds of use-cases and broader audiences. Cloud orchestration will be a driver in this development as well since only a handful of users will be willing to invest in operating their own orchestration services, when the same solution can be purchased easily from the cloud.

With widely available RPA developer tools and cloud orchestration, one will see the beginning of the next wave of RPA adoption. Small and medium-sized enterprises will look for ways to incorporate business automation tools but without their own dedicated IT employees. A market need will arise for a new service provider: robotics-as-a-service (RaaS) operator. RaaS operators will claim a segment of the research field, with some operators focusing on specific verticals and others being general automation service providers.

However, as such agents, artificial workers or robots handle sensitive data there is a problem that secrets must be respected and moreover fraudulent access must be prohibited in any case. This is of general interest and needs improved solutions for data access and rights management.

The prior art does not in any case consider such privacy issues or at least an alternative contribution is required. In case several contributions are available attacks are still made more difficult and labor intense as respective entities do not know which protocols are underlying a specific RPA platform. Hence, there is a need to provide additional contributions in the research field of secure process automation, especially in a potentially distributed, heterogeneous hardware environment. Typically, interfaces are at least detectable and so a sophisticated protocol is required which allows the exchange of technical secrets over the network.

Moreover, the prior art lacks possibilities to respond to different hardware and software configurations. One environment may be more appropriate for the accomplishment of a task than another one. The prior art lacks a dynamic distribution of tasks to the best performing environment.

When software is executed the environment must contain all needed dependencies and all the components must be compatible. Current solutions require that either executable software is compatible with the existing static host environment or the whole environment is packed with the executable. First option is efficient but lacks the characteristics that are needed in modern dynamic cloud environment where multiple entities utilise same environments to execute software that originates from different development environments and utilise almost infinite variation of dependencies and their versions. The second options provide ability the specify each entity with custom build execution environment, but with the cost of large consumption of network bandwidth, storage space and setup time. The present invention combines the benefits for containers unique environments with effectiveness of static host environments with novel hierarchical caching solution.

In cloud-based executions CPU time is the cost generating resource so effectively running scalable solutions always focuses on reducing run time.

When creating and managing multiple isolated environments for Python and Robot Framework base automation runs the time used to spin-up executors and executing runs gets a big hit from moving the data needed for the environment.

Environments are relatively big (upwards of 200MB to gigabytes) and normally consist a lot of small files, which causes a lot of network traffic and a lot of CPU time is used to get and wait for network. The environment according to an aspect of the present invention can be on some local storage of the running instance as it needs to be fast and reliable. Due to reasons above creating environments from scratch is slow which means caching is a must-have to run and scale execution in cloud environments efficiently. Most of the files between different environments are the same so a lot of redundant data is moved and stored. Same or very similar environments are re-used constantly but to achieve isolation normally the entire environment is re-created.

The environment cache must be fast which means it cannot exist behind any network layer and needs to be available in some fast local storage for the using executor.

When scaling to running multiple instances in cloud that run multiple containers the CPU time spent on moving the cache becomes a critical resource. The same problem does exist when running on a personal computer, but the resource restrictions are different. Storing the same files multiple time takes up a lot of disk space. Restoring and verifying the integrity of an isolated environment also requires disk space and CPU when creating the and re-creating the environments. File corruption is much more common in personal computer which can cause significant problems. The required environments are not known before-hand so pre-building into docker containers or instance images is out of the question.

Accordingly, it is an object of the present invention to provide a method for hash optimized composition of a global cache for isolated execution environments addressing the above problems. There is a problem that environments require large storage capacities, processing time and power and bandwidth in case the data is transmitted over a network. Moreover, it is an object of the present invention to provide a respectively arranged system arrangement along with a computer program product and a storage medium.

The object is solved by the subject-matter of the independent claim 1. Further contributions are provided by the dependent claims.

Accordingly, a method for hash optimized composition of a global cache for isolated execution environments is suggested, comprising identifying respectively one required runtime environment per software component out of a number of several software components; dividing each identified runtime environment into a set of runtime environment components; storing in a central storage at least an indication of unique runtime environment components, the unique runtime environment components in their entireness forming all runtime environments; and identifying a required runtime environment for a specific software component and loading all runtime environment components of the identified runtime environment from the central storage into an execution environment.

A method for hash optimized environment management is suggested as the environments along with the software components are hashed and can therefore be addressed by their hash value. Moreover, this approach provides the advantage that a security mechanism is implemented as the data integrity is assured and moreover a fraudulent data manipulation can be detected as respective hash values would differ. Optimizing the data management and storage management has also technical effects such as hardware efficiency. An optimized environment management results in less hardware requirements such as processing time, storage usage and consumption along with less bandwidth requirements as less data is transmitted over the network.

A composition of a global cache for isolated execution environments is suggested the cache holding at least the environments or a hint to the environments. It is of advantage that the environments are stored in their entirety but without redundant environment components. Hence, overlapping parts of environments can be stored only once and as a result the storage consumption is directly decreased. The execution environments are isolated once they are deployed but or stored in their complete entireness in the global cache. In the global cache the environments may overlap and accordingly not each environment is stored separately but all components are stored such that all components deliver all parts of each environment. Once the environments are deployed, meaning loaded into the execution environment, they are isolated.

Identifying respectively one required runtime environment per software component is performed such that when a software component shall be executed the environment is selected and will be assembled for deployment. In general, a software component required further files for configuration purposes, for instance, and the entireness of such additional files or components in general can be called environment. The environment provides surrounding files which allow the execution of the software component and consequently they provide a framework of features enabling the execution of software. An environment may hence contain, files, further software components and may even comprise specific hardware components.

A software component out of a number of several software components addresses the fact that several software components are present each potentially requiring its own environment. Hence, the number of environments is equal or less compared to the number of software components to be executed. The software components can be stored in a repository and can be executed in parallel or in sequence.

Performing dividing each identified runtime environment into a set of runtime environment components results in an amount of parts of the environment such that these parts can be stored in the global cache. The granularity of division can be for instance file level such that the environment components are files and respectively dependencies. Such dependencies again can be stored in files. Dividing each identified runtime environment into files may result in a first set of files for the first environment and a second set of files for the second environment. In the global cache each file is stored once such that overlapping files are stored once and the redundant file is discarded. File sets overlap in case identical files are stored in both sets. This can be identified for instance by hash values. Files or even sets of files may obtain a hash value and once identical hash values are identified an overlap exists.

Storing in a central storage at least an indication of unique runtime environment components results in the environment components as such being stored in the central storage, also referred to as global cache, or a link is stored. Hence, an indication identifies where the environment components are stored. Summarizing this issue the environment components can be directly or indirectly stored in the central storage. Even a mixed approach is possible where some of the components are directly stored in the central storage and furthermore links to further components are stored. The links may be comprised in a file. The central storage is the storage where components are stored, which does not necessarily mean that the storage as such is physically set up in one place or is operated by a single machine but rather that storage represents the role of a system wide central storage.

The unique runtime environment components in their entireness form all runtime environments such that every environment component is stored but only once. Hence, all files or components of each environment are stored in the central storage but without redundant files or components. In this way all required data are stored and all environments can be formed but unnecessary data is discarded.

Identifying a required runtime environment for a specific software component can be performed by reading a config file, which indicates which software component requires which environment. Hence, a framework can be set up that allows the execution of the software component. The suggested method may scan the software component to be executed and consult a database indicating which environment is necessary.

After that loading all runtime environment components of the identified runtime environment from the central storage into an execution environment is performed such that the software component is ready to run. The required runtime environment is selected and files or components are deployed. The execution environment can likewise use a cache.

The invention may use Software Robots and Software Robot Developers especially to describe robots and developers who can use a specific programming language (e.g. Robot Framework and Python) to make more "professional" and demanding technical robots and is accordingly not only for more casual business users. According to an aspect of the present invention casual business users may be excluded. The present invention overcomes the problem that most of existing RPA solutions are local installations, and to use cloud, several clouds and on-premises components make the need for the secret management more important and complex, which poses a further motivation for the present contribution.

In cloud environments execution units (docker containers) execute different software (robots), and each software requires many software components (libraries) and their specific versions. Invention defines a method for effectively caching the needed software compositions for multiple execution units. The cache mechanism is structured as a tree that allows scaling in cloud environments where execution units can be hosted by multiple instances.

The method defined in this invention has optimizing technical properties such as minimized storage need, minimized network traffic and minimized the re-creation delay of software composition.

An aspect of the present invention is to have a caching system that can uniquely identify content of an isolated executions environment and cache those so that a unique software component does not need to be stored or transferred multiple times. This minimizes the spin-up and transfer times in Cloud executions while providing quick response times for the end-user executions.

Leveraging the invention so that there are one or more Global Cache Generators, also referred to as central storage or global cache, that handle new incoming environments into cache items enables scaling of the solution in Cloud. Individual Cloud Executor instances get the cache to local storage faster on start-up and can keep the cache up to date much faster as the invention reduces the amount of software components that need to be moved and the size of individual components. As the software components are quite common between environments the performance gain can be exponential.

The solution can also be used to significantly affect the cost of running isolated execution environments on an individual computer by creating a local environment cache. When creating the cache, the load on CPU and disk I/O are reduced significantly when compared to full environment creation and caching.

The disk space required is reduced significantly which reduces the need for clean-up tasks. The verification and isolation of environment is improved when each file is checked with hashing.

Another application of the solution is to freeze or lock an environment. Here the target is to get the exact same content for an environment that was created earlier. By identifying individual components and structures uniquely and making them immutable the environment after re-animation contains the same files.

According to an aspect of the present invention each runtime environment comprises runtime environment components, software code, packages, data files, meta files, configuration files, at least one library, at least one folder, instructions, dependencies and/ or robot information. This provides the advantage that an environment can be made up of several components and hence granularity can be adapted. The environment can be broken down on different levels and the method can be performed applying different granularities. The granularities can be chosen under consideration of the underlying hardware structure.

According to a further aspect of the present invention each runtime environment is stored in a single version. This provides the advantage that not several environment versions have to be controlled but rather one version of one environment is represented by one environment. The difference compared to known approaches is that existing frameworks can be provided in several versions. For instance, framework one and framework two. The present invention stores one version of the framework as one environment. In case a new version is released a new environment is created. This is possible as the present invention does not store redundant components. Else the storage space would increase drastically with each version.

According to a further aspect of the present invention at least an indication of unique runtime environment components comprises a link to runtime environment components, an address of runtime environment components and/ or the runtime environment components. This provides the advantage that the components can either be stored as such or the global cache, also referred to as central storage, points to the storage address the components are stored at. A mixed approach of storing and pointing is likewise possible.

According to a further aspect of the present invention the execution environment provides a software and/ or hardware structure for execution of the respective software component. This provides the advantage that a framework can be provided such that the software component can rely on predefined hardware and software components.

According to a further aspect of the present invention a unique hash value is assigned to each runtime environment component. This provides the advantage that the integrity of the data can be assured and moreover a security mechanism is applied as changing the data results in a different hash value, which can be detected.

According to a further aspect of the present invention at least a runtime environment required for software component execution and/ or the software component is cached. This provides the advantage that a responsive method is suggested that can be implemented using fast cache storage. This is of special advantage in the present scenario as the software components may be formed by robots and software agents which only have a very limited timely lifespan. This feature helps to create a reliable environment and ready to run software component in short time.

According to a further aspect of the present invention the central storage is implemented as a cache and/ or is organized using a tree like structure. This provides the advantage that an efficient storage structure is created.

According to a further aspect of the present invention identifying respectively one required runtime environment per software component is performed iteratively and runtime environment components that are no longer required for software component execution are deleted and runtime environment components not being stored are stored. This provides the advantage that runtime environment components and/ or software components are identified and verified using hash values.

According to a further aspect of the present invention the method is implemented as a software protocol in a distributed hardware environment. This provides the advantage that the method can be implemented in a cloud or server system and addresses the hardware by applying the suggested teachings.

According to a further aspect of the present invention the software component operates a software agent, a set of control instructions, a physical robot, a software robot and/ or an autonomous artificial intelligence agent. This provides the advantage that the software component can be formed by several approaches and those scenarios where the teachings of the present invention can be applied at great advantage are addressed.

The object is also solved by a system arrangement for hash optimized composition of a global cache for isolated execution environments, comprising an identification unit arranged to identify respectively one required runtime environment per software component out of a number of several software components; a parser unit arranged to divide each identified runtime environment into a set of runtime environment components; an interface unit arranged to store in a central storage at least an indication of unique runtime environment components, the unique runtime environment components in their entireness forming all runtime environments; and
a deployment unit arranged to identify a required runtime environment for a specific software component and to load all runtime environment components of the identified runtime environment from the central storage into an execution environment.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly, the method teaches steps which are arranged to operate the suggested device. Furthermore, the device comprises structural features allowing the accomplishment of the suggested method. In addition, a computer program and a computer program product respectively is suggested comprising instruction which perform the suggested method when executed on a computer or the device according to the present invention. Furthermore, the instructions provide means for implementing the structural features of the claimed device. Accordingly, an operable image of the structural features of the device can be created. Likewise, an arrangement comprising the structural device features is provided.

Wherever, structural features are provided they can likewise be established virtually thereby creating a virtual instance of physical structures. For instance, a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The terms "left", "right", "top" and "bottom" used in the description of the exemplary aspects relate to the drawings in an orientation with normally legible figure designation or normally legible reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a block diagram of the underlying concepts according to an aspect of the present invention;
- Figure 2:: a further block diagram of the underlying concepts according to an aspect of the present invention;
- Figure 3:: an overview of the general approach of the suggested method according to an aspect of the present invention; and
- Figure 4:: a flow chart depicting a method for hash optimized composition of a global cache for isolated execution environments according to an aspect of the present invention.

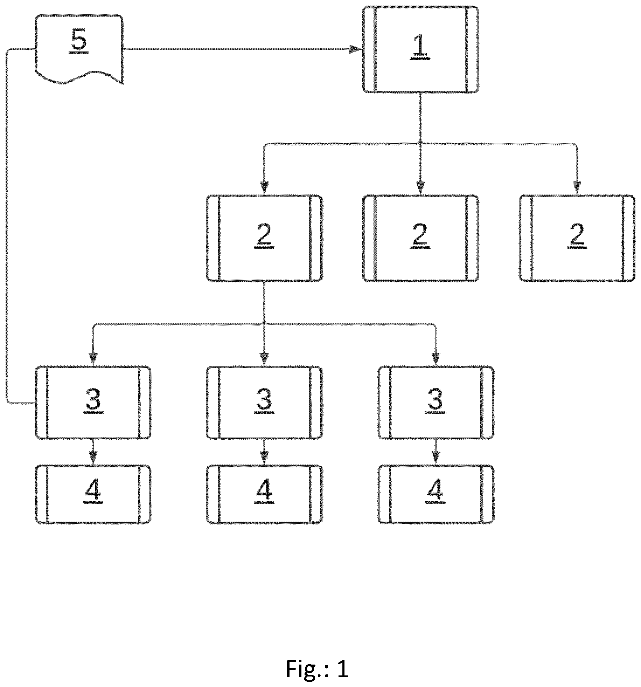

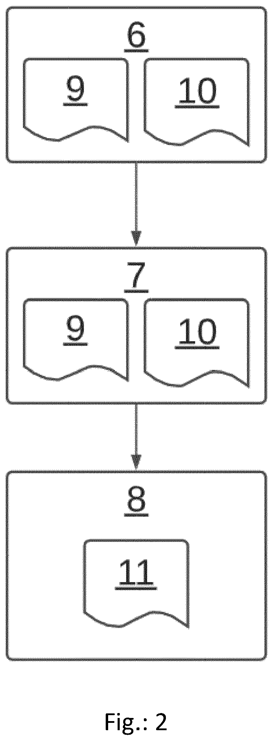

Figure 1 shows a block diagram of the underlying concepts of the present invention. The reference signs of figures 1 and 2 are explained as follows, wherein the leading number represents the respective reference sign:
1. Global Cache Generator
   a. Receives Environment Identity Descriptors from executions.
   b. Builds new environments into the Global Cache.
2. Cloud Executor Instance
   a. Updates the new items from the Global Cache into a fast local storage.
   b. Spins up the Execution Units for each Robot run (Execution Instance can be running multiple Execution Units).
   c. Provides Execution Units access to the Global Cache from the local fast storage.
3. Execution Unit
   a. Container / machine that is started → executes a single Robot run → shutdown.
   b. Execution Units do not know and have no access to other Execution Units (as they can be executing robot run from different user)
   c. On technical level these are Docker Containers but the solution is NOT bound to just this tech. the same solution would work in other virtualization/container toolchains
4. Robot run
   a. Uses the Global Cache from the local fast storage to re-animate the environment defined in the robot package by Environment Identity Descriptor.
   b. Executes a run of the Robot process.
   c. Reports the used Environment Identity Descriptor to the Global Cache Generator so that new environments get added to the Global Cache.
5. Environment Identity Descriptor
   a. Defines a unique environment for a Robot run.
   b. Solution does NOT limit what technologies are used to define an environment.
   c. Current implementation uses conda environment file where user can define packages needed and their versions.
6. Global Cache Storage
   a. Global Storage on Cloud service (not bound to any specific tech.).
   b. Houses the Global Cache built by the Global Cache Generator.
7. Cloud Executor Instance Storage
   a. Used to house and provide the Global Cache for the Execution Units.
   b. Providing the Global Cache from here to the Execution Units avoids any networking delays when using the present invention.
8. Execution unit storage
   a. Houses the Robot run.
   b. This storage only exists during the execution.
9. Hashed Software Components
   a. Individual items of the environment have unique hashes.
10. Hashed Environment Structures
   a. The structures containing the Hashed Software Components are also hashed enabling the re-animation of the environment.
11. Robot Run environment
   a. Re-animated environment for a single robot run extracted using the present invention.
   b. Contains only the specific Software Components for the execution.
   c. Fully isolated from any other Robot runs.
   d. Wiped as the execution unit is cleared up after each run.

Regarding the above reference signs several instances may carry the same reference sign.

The solution according to an aspect of the present invention can create and store an isolated execution environment into a cache. The solution identifies and stores individual files instead of complete environments. When an existing environment is found in cache no work is done according to an aspect of the present invention. The cache content is immutable, so nothing is updated, only new items are added. Standard hash algorithms are used to identify and verify content as well as standard packing algorithms are used to reduce content size.

Simple packing algorithms are enough to produce most of the savings here. In general environment content have some binary data that will not compress so the major gains come from compressing smaller text-based files. Biggest benefits of the solution come from the shared files. In tests the space saving is always well over 50% because environments tend to use same basic components and those components are usually the big ones.

This benefit is exponential in that the more environments are cached the less new content is introduced. The solution maintains file permissions, names and structures independent from platform. This is required to for example maintain executable content as executable on Linux and macOS environments. This is not needed for security purposes. Describing the file system structure recursively enables faster use and full recovery by only handling changes between environments. Using these enables the distribution and use of the resulting caches in scaled cloud setups.

The solution is able to "re-animate" an environment from the cache based on an identity descriptor. The descriptor is unique to the content that is defined by the user for the execution environment. The end result for the environment is always fully extracted file structure that contains only files and folders defined to the original environment to achieve isolation. Individual execution can corrupt the execution environment, the solution checks and restores the environment on each execution start. Environment "re-animation" is always a full recovery, but it is done by only touching the changed parts of the environment. To recover and remove individual files or folders is possible. Actions can be done in parallel because of the recursive description of the environment, this enables much more efficient use of CPU time.

On the security aspect: In order to steal, misuse or get access to content or specific environment the malicious user would need to recreate the overall environment descriptor which would mean compiling all the unique hashes of the content and their locations in the environment. The solution generates a static immutable environment cache storage. This storage can be synchronized to multiple executor instances. At this level as well only the new files in cache need to be moved and this results in significant savings in CPU time. When a new environment is encountered the solution only needs to create the environment once and move "a diff" of the file structure to the cache location. The "Global cache" builder can handle the processing of new environments. The only files moved are the new ones.
1. Cloud instance(s) that is building the new environments encounter in customer use.
   a. The solution used here to create the global environment cache.
   b. Having the cache build and updated actions performed in one controlled location enables:
      i. CPU time saving as same environment gets built once.
      ii. Building is not affecting individual executions.
      iii. Checks and security.
2. Executor instances to house and scale the execution units.
   a. For example, EC2 instances with defined resources running multiple docker containers.
   b. Responsible for moving the cache to a fast local storage in the instance so that execution unit can access it.
   c. These instances are re-cycled, started and shutdown by normal cloud automatic scaling conventions.
3. Execution units
   a. Docker container can only contain the static "OS level environment", but customer specific execution environment is dynamic and cannot be pre-build into Docker containers.
   b. Containers have a read-only access to the cache in the EC2 instance cache.
4. Execution environment
   a. Environments are re-animated using the solution by the execution unit per execution run.
   b. Individual execution environments are lost when container closes.
   c. Writing to cache in this level is prohibited as the individual execution cannot be trusted.
   d. Each execution notifies the identity / content of the execution environment to the Global cache builders.
      i. The cache can be updated elsewhere without affecting individual executions.
      ii. The cache is built in a controlled location enabling checks and security.

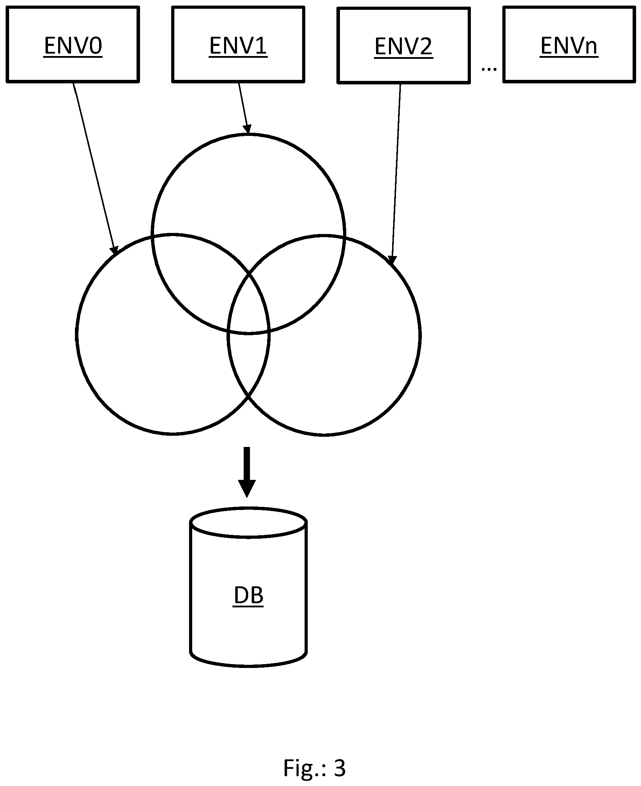

Figure 3 shows the environments ENV0, ENV1, ... ENVn which are divided into components. The respective set of components is indicated each by a circle. As the environments are not disjoint they overlap. This results in several components, such as files, to be stored redundantly. In the present example redundant files may be present twice or three times depending on the level of overlapping. The present invention suggests to store respectively only one of these files in the global cache, also referred to as central storage. In the present example the global cache hosts a database DB. However any storage can be used, not necessarily a database is requied.

According to this approach every environment is handled and stored but duplicates are removed.

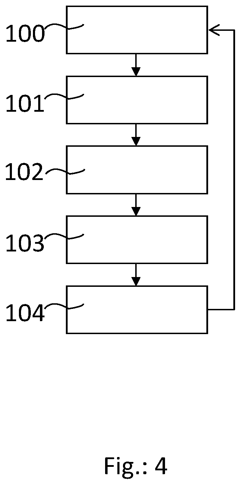

Figure 4 shows a method for hash optimized composition of a global cache for isolated execution environments, comprising identifying 100 respectively one required runtime environment per software component out of a number of several software components; dividing 101 each identified 100 runtime environment into a set of runtime environment components; storing 102 in a central storage at least an indication of unique runtime environment components, the unique runtime environment components in their entireness forming all runtime environments; and identifying 103 a required runtime environment for a specific software component and loading 104 all runtime environment components of the identified 103 runtime environment from the central storage into an execution environment.

## Claims

1. A method for hash optimized composition of a global cache for isolated execution environments, comprising:
- identifying (100), out of a number of runtime environments (ENVO, ENV1, .. ENVn), respectively one required runtime environment (ENVO, ENV1, .. ENVn) per software component out of a number of several software components such that when a software component shall be executed the environment is selected and will be assembled for deployment, where the required runtime environment provides a framework of features enabling the execution of the respective software component and where the number of runtime environments is equal or less compared to the number of software components to be executed;
- dividing (101) each identified (100) runtime environment into a set of runtime environment components, where each runtime environment comprises runtime environment components;
- storing (102) in a central storage at least an indication of unique runtime environment components, the unique runtime environment components in their entireness forming all runtime environments such that overlapping runtime environment components are stored only once in the global cache; and
- identifying (103) a required runtime environment for a specific software component and loading (104) all runtime environment components of the identified (103) runtime environment from the central storage into an execution environment; wherein
- a unique hash value is assigned to each runtime environment component.

2. The method according to claim 1, **characterized in that** each runtime environment comprises software code, packages, data files, meta files, configuration files, at least one library, at least one folder, instructions, dependencies and/ or robot information.

3. The method according to claim 1 or 2, **characterized in that** each runtime environment is stored in a single version.

4. The method according to any one of the preceding claims, **characterized in that** at least an indication of unique runtime environment components comprises a link to runtime environment components, an address of runtime environment components and/ or the runtime environment components.

5. The method according to any one of the preceding claims, **characterized in that** the execution environment provides a software and/ or hardware structure for execution of the respective software component.

6. The method according to any one of the preceding claims, **characterized in that** at least a runtime environment required for software component execution and/ or the software component is cached.

7. The method according to any one of the preceding claims, **characterized in that** the central storage is implemented as a cache and/ or is organized using a tree like structure.

8. The method according to any one of the preceding claims, **characterized in that** identifying (100) respectively one required runtime environment per software component is performed iteratively and runtime environment components that are no longer required for software component execution are deleted and runtime environment components not being stored are stored.

9. The method according to any one of the preceding claims, **characterized in that** runtime environment components and/ or software components are identified and verified using hash values.

10. The method according to any one of the preceding claims, **characterized in that** the method is implemented as a software protocol in a distributed hardware environment.

11. The method according to any one of the preceding claims, **characterized in that** the software component operates a software agent, a set of control instructions, a physical robot, a software robot and/ or an autonomous artificial intelligence agent.

12. A system arrangement for hash optimized composition of a global cache for isolated execution environments, comprising:
- an identification unit arranged to identify (100), out of a number of runtime environments (ENVO, ENV1, .. ENVn), respectively one required runtime environment (ENVO, ENV1, .. ENVn) per software component out of a number of several software components such that when a software component shall be executed the environment is selected and will be assembled for deployment, where the required runtime environment provides a framework of features enabling the execution of the respective software component and where the number of runtime environments is equal or less compared to the number of software components to be executed;
- a parser unit arranged to divide (101) each identified (100) runtime environment into a set of runtime environment components, where each runtime environment comprises runtime environment components;
- an interface unit arranged to store (102) in a central storage at least an indication of unique runtime environment components, the unique runtime environment components in their entireness forming all runtime environments such that overlapping runtime environment components are stored only once in the global cache; and
- a deployment unit arranged to identify (103) a required runtime environment for a specific software component and to load (104) all runtime environment components of the identified (103) runtime environment from the central storage into an execution environment; wherein
- a unique hash value is assigned to each runtime environment component.

13. A computer program product comprising instructions to cause the arrangement of claim 12 to execute the steps of the method of any one of claims 1 to 9.

14. A computer-readable medium having stored thereon the computer program of claim 13.

## Patentansprüche

1. Verfahren zur Hash-optimierten Zusammensetzung eines globalen Caches für isolierte Ausführungsumgebungen, umfassend:
- Identifizieren (100), aus einer Anzahl an Laufzeitumgebungen (ENVO, ENV1, .. ENVn), jeweils einer erforderlichen Laufzeitumgebung (ENVO, ENV1, .. ENVn) pro Softwarekomponente aus einer Anzahl an mehreren Softwarekomponenten, sodass, wenn eine Softwarekomponente ausgeführt werden soll, die Umgebung ausgewählt wird und für Einsatz zusammengestellt wird, wobei die erforderliche Laufzeitumgebung einen Rahmen von Funktionen bereitstellt, welche die Ausführung der jeweiligen Softwarekomponente ermöglichen und wobei die Anzahl an Laufzeitumgebungen verglichen mit der Anzahl an Softwarekomponenten, die auszuführen ist, gleich oder weniger ist;
- Unterteilen (101) jeder identifizierten (100) Laufzeitumgebung in einen Satz von Laufzeitumgebungskomponenten, wobei jede Laufzeitumgebung Laufzeitumgebungskomponenten umfasst;
- Speichern (102), in einem zentralen Speicher, von zumindest einem Hinweis auf eindeutige Laufzeitumgebungskomponenten, wobei die eindeutigen Laufzeitumgebungskomponenten in ihrer Gesamtheit alle Laufzeitumgebungen bilden, sodass überlappende Laufzeitumgebungskomponenten nur einmal in dem globalen Cache gespeichert werden; und
- Identifizieren (103) einer erforderlichen Laufzeitumgebung für eine spezifische Softwarekomponente und Laden (104) aller Laufzeitumgebungskomponenten der identifizierten (103) Laufzeitumgebung aus dem zentralen Speicher in eine Ausführungsumgebung; wobei
- ein eindeutiger Hash-Wert jeder Laufzeitumgebungskomponente zugewiesen wird.

2. Verfahren nach Anspruch 1, **dadurch gekennzeichnet, dass** jede Laufzeitumgebung Softwarecode, Pakete, Datendateien, Metadateien, Konfigurationsdateien, zumindest eine Bibliothek, zumindest einen Ordner, Anweisungen, Abhängigkeiten und/oder Roboterinformationen umfasst.

3. Verfahren nach Anspruch 1 oder 2, **dadurch gekennzeichnet, dass** jede Laufzeitumgebung in einer einzelnen Version gespeichert ist.

4. Verfahren nach einem der vorhergehenden Ansprüche, **dadurch gekennzeichnet, dass** zumindest ein Hinweis auf eindeutige Laufzeitumgebungskomponenten einen Link zu Laufzeitumgebungskomponenten, eine Adresse von Laufzeitumgebungskomponenten und/oder die Laufzeitumgebungskomponenten umfasst.

5. Verfahren nach einem der vorhergehenden Ansprüche, **dadurch gekennzeichnet, dass** die Ausführungsumgebung eine Software- und/oder Hardwarestruktur zur Ausführung der j eweiligen Softwarekomponente bereitstellt.

6. Verfahren nach einem der vorhergehenden Ansprüche, **dadurch gekennzeichnet, dass** zumindest eine Laufzeitumgebung, die zur Softwarekomponentenausführung erforderlich ist, und/oder die Softwarekomponente gecacht wird.

7. Verfahren nach einem der vorhergehenden Ansprüche, **dadurch gekennzeichnet, dass** der zentrale Speicher als Cache implementiert ist und/oder unter Verwendung einer baumartigen Struktur organisiert ist.

8. Verfahren nach einem der vorhergehenden Ansprüche, **dadurch gekennzeichnet, dass** das Identifizieren (100) jeweils einer erforderlichen Laufzeitumgebung pro Softwarekomponente iterativ durchgeführt wird und Laufzeitumgebungskomponenten, die für Softwarekomponentenausführung nicht mehr erforderlich sind, gelöscht werden und Laufzeitumgebungskomponenten, die nicht gespeichert sind, gespeichert werden.

9. Verfahren nach einem der vorhergehenden Ansprüche, **dadurch gekennzeichnet, dass** Laufzeitumgebungskomponenten und/oder Softwarekomponenten unter Verwendung von Hash-Werten identifiziert und verifiziert werden.

10. Verfahren nach einem der vorhergehenden Ansprüche, **dadurch gekennzeichnet, dass** das Verfahren als Softwareprotokoll in einer verteilten Hardwareumgebung implementiert wird.

11. Verfahren nach einem der vorhergehenden Ansprüche, **dadurch gekennzeichnet, dass** die Softwarekomponente einen Software-Agenten, einen Satz von Steueranweisungen, einen physischen Roboter, einen Software-Roboter und/oder einen autonomen Agenten künstlicher Intelligenz betreibt.

12. Systemanordnung zur Hash-optimierten Zusammensetzung eines globalen Caches für isolierte Ausführungsumgebungen, umfassend:
- eine Identifikationseinheit, die angeordnet ist, um aus einer Anzahl an Laufzeitumgebungen (ENVO, ENV1, .. ENVn), jeweils eine erforderliche Laufzeitumgebung (ENVO, ENV1, .. ENVn) pro Softwarekomponente aus einer Anzahl an mehreren Softwarekomponenten zu identifizieren (100), sodass, wenn eine Softwarekomponente ausgeführt werden soll, die Umgebung ausgewählt wird und für Einsatz zusammengestellt wird, wobei die erforderliche Laufzeitumgebung einen Rahmen von Funktionen bereitstellt, welche die Ausführung der jeweiligen Softwarekomponente ermöglichen und wobei die Anzahl an Laufzeitumgebungen verglichen mit der Anzahl an Softwarekomponenten, die auszuführen ist, gleich oder weniger ist;
- eine Parser-Einheit, die angeordnet ist, um jede identifizierte (100) Laufzeitumgebung in einen Satz von Laufzeitumgebungskomponenten zu unterteilen (101), wobei jede Laufzeitumgebung Laufzeitumgebungskomponenten umfasst;
- eine Schnittstelleneinheit, die angeordnet ist, um in einem zentralen Speicher zumindest einen Hinweis auf eindeutige Laufzeitumgebungskomponenten zu speichern (102), wobei die eindeutigen Laufzeitumgebungskomponenten in ihrer Gesamtheit alle Laufzeitumgebungen bilden, sodass überlappende Laufzeitumgebungskomponenten nur einmal in dem globalen Cache gespeichert werden; und
- eine Einsatzeinheit, die angeordnet ist, um eine erforderliche Laufzeitumgebung für eine spezifische Softwarekomponente zu identifizieren (103) und um alle Laufzeitumgebungskomponenten der identifizierten (103) Laufzeitumgebung aus dem zentralen Speicher in eine Ausführungsumgebung zu laden (104); wobei
- ein eindeutiger Hash-Wert jeder Laufzeitumgebungskomponente zugewiesen wird.

13. Computerprogrammprodukt, das Anweisungen umfasst, um die Anordnung nach Anspruch 12 zu veranlassen, die Schritte des Verfahrens nach einem der Ansprüche 1 bis 9 auszuführen.

14. Computerlesbares Medium, auf dem das Computerprogramm nach Anspruch 13 gespeichert ist.

## Revendications

1. Procédé de composition optimisé par hachage d'un cache global pour des environnements d'exécution isolés, comprenant :
- l'identification (100), parmi un certain nombre d'environnements d'exécution (ENVO, ENV1, .. ENVn), respectivement d'un environnement d'exécution requis (ENVO, ENV1, .. ENVn) par composant logiciel parmi un certain nombre de composants logiciels de telle sorte que lorsqu'un composant logiciel doit être exécuté, l'environnement soit sélectionné et soit ensuite assemblé pour déploiement, où l'environnement d'exécution requis fournit un cadre de fonctionnalités permettant l'exécution du composant logiciel respectif et où le nombre d'environnements d'exécution est égal ou inférieur au nombre de composants logiciels à exécuter ;
- la division (101) de chaque environnement d'exécution identifié (100) en un ensemble de composants d'environnement d'exécution, où chaque environnement d'exécution comprend des composants d'environnement d'exécution ;
- le stockage (102) dans une mémoire centrale d'au moins une indication de composants d'environnement d'exécution uniques, les composants d'environnement d'exécution uniques dans leur intégralité formant tous les environnements d'exécution de sorte que les composants d'environnement d'exécution qui se chevauchent ne soient stockés qu'une seule fois dans le cache global ; et
- l'identification (103) d'un environnement d'exécution requis pour un composant logiciel spécifique et le chargement (104) de tous les composants d'environnement d'exécution de l'environnement d'exécution identifié (103) depuis la mémoire centrale dans un environnement d'exécution ; dans lequel
- une valeur de hachage unique est attribuée à chaque composant d'environnement d'exécution.

2. Procédé selon la revendication 1, **caractérisé en ce que** chaque environnement d'exécution comprend du code logiciel, des packages, des fichiers de données, des métafichiers, des fichiers de configuration, au moins une bibliothèque, au moins un dossier, des instructions, des dépendances et/ou des informations de robot.

3. Procédé selon la revendication 1 ou 2, **caractérisé en ce que** chaque environnement d'exécution est stocké dans une seule version.

4. Procédé selon l'une quelconque des revendications précédentes, **caractérisé en ce qu'**au moins une indication de composants d'environnement d'exécution uniques comprend un lien vers des composants d'environnement d'exécution, une adresse de composants d'environnement d'exécution et/ ou des composants d'environnement d'exécution.

5. Procédé selon l'une quelconque des revendications précédentes, **caractérisé en ce que** l'environnement d'exécution fournit une structure logicielle et/ ou matérielle pour l'exécution du composant logiciel respectif.

6. Procédé selon l'une quelconque des revendications précédentes, **caractérisé en ce qu'**au moins un environnement d'exécution requis pour l'exécution du composant logiciel et/ ou le composant logiciel est mis en cache.

7. Procédé selon l'une quelconque des revendications précédentes, **caractérisé en ce que** la mémoire centrale est mise en oeuvre sous la forme d'un cache et/ ou est organisée en utilisant une structure arborescente.

8. Procédé selon l'une quelconque des revendications précédentes, **caractérisé en ce que** l'identification (100) respectivement d'un environnement d'exécution requis par composant logiciel est effectuée de manière itérative et les composants d'environnement d'exécution qui ne sont plus requis pour l'exécution du composant logiciel sont supprimés et les composants d'environnement d'exécution qui ne sont pas en cours de stockage sont stockés.

9. Procédé selon l'une quelconque des revendications précédentes, **caractérisé en ce que** des composants d'environnement d'exécution et/ ou des composants logiciels sont identifiés et vérifiés à l'aide de valeurs de hachage.

10. Procédé selon l'une quelconque des revendications précédentes, **caractérisé en ce que** le procédé est mis en oeuvre sous la forme d'un protocole logiciel dans un environnement matériel distribué.

11. Procédé selon l'une quelconque des revendications précédentes, **caractérisé en ce que** le composant logiciel exploite un agent logiciel, un ensemble d'instructions de commande, un robot physique, un robot logiciel et/ ou un agent d'intelligence artificielle autonome.

12. Agencement de système pour la composition optimisée par hachage d'un cache global pour des environnements d'exécution isolés, comprenant :
- une unité d'identification agencée pour identifier (100), parmi un certain nombre d'environnements d'exécution (ENVO, ENV1, .. ENVn), respectivement un environnement d'exécution requis (ENVO, ENV1, .. ENVn) par composant logiciel parmi un certain nombre de composants logiciels de telle sorte que lorsqu'un composant logiciel doit être exécuté, l'environnement soit sélectionné et soit ensuite assemblé pour déploiement, où l'environnement d'exécution requis fournit un cadre de fonctionnalités permettant l'exécution du composant logiciel respectif et où le nombre d'environnements d'exécution est égal ou inférieur au nombre de composants logiciels à exécuter ;
- une unité d'analyseur agencée pour diviser (101) chaque environnement d'exécution identifié (100) en un ensemble de composants d'environnement d'exécution, où chaque environnement d'exécution comprend des composants d'environnement d'exécution ;
- une unité d'interface agencée pour stocker (102) dans une mémoire centrale au moins une indication de composants d'environnement d'exécution uniques, les composants d'environnement d'exécution uniques dans leur intégralité formant tous les environnements d'exécution de sorte que les composants d'environnement d'exécution qui se chevauchent ne soient stockés qu'une seule fois dans le cache global ; et
- une unité de déploiement agencée pour identifier (103) un environnement d'exécution requis pour un composant logiciel spécifique et pour charger (104) tous les composants d'environnement d'exécution de l'environnement d'exécution identifié (103) depuis la mémoire centrale dans un environnement d'exécution ; dans lequel
- une valeur de hachage unique est attribuée à chaque composant d'environnement d'exécution.

13. Produit de programme informatique comprenant des instructions pour amener l'agencement de la revendication 12 à exécuter les étapes du procédé de l'une quelconque des revendications 1 à 9.

14. Support lisible par ordinateur sur lequel est stocké le programme informatique selon la revendication 13.
